# EUROPÄISCHE PATENTSCHRIFT

(11) **EP 1 477 353 B1**
(45) Veröffentlichungstag und Bekanntmachung des Hinweises auf die Patenterteilung: **25.04.2007**
(21) Anmeldenummer: 04450102.1
(22) Anmeldetag: 06.05.2004
(51) Int. Cl.: B60J 7/14, B60J 7/02

(54) **Dach für einen Lastkraftwagen oder Anhänger mit einem von oben befüllbaren Laderaum**
Roof for truck or trailer provided with a loading space which can be loaded from above
Toit pour camion ou remorque avec espace de chargement opérable d'en haut

(30) Priorität: 13.05.2003 AT 3272003 U
(43) Veröffentlichungstag der Anmeldung: 17.11.2004
(73) Patentinhaber: Peischl Fahrzeugbau Gesellschaft m.b.H., 7551 Stegersbach (AT)
(72) Erfinder: Peischl, Ernst, 7551 Stegersbach (AT)
(74) Vertreter: Rippel, Andreas

(56) Entgegenhaltungen:
- DE-A1- 3 116 641
- US-A- 3 854 771
- US-A- 4 626 024

## Beschreibung

Die Erfindung bezieht sich auf ein verschieb- und verschwenkbares Dach für einen Lastkraftwagen oder einen Anhänger mit einem von oben befüllbaren Laderaum.

Derartige Fahrzeuge werden zum Transport von Schüttgütern verwendet, die von oben in den Laderaum eingefüllt werden können. Solche Schüttgüter sind z.B. Sägespäne, Hackschnitzel und dergleichen. Die Entladung der Schüttgüter erfolgt entweder durch Kippen des gesamten Laderaumes oder, was zweckmäßiger weil einfacher ist, über hintere Türen und einen Schiebeboden, mittels dem das Gut durch die geöffneten Türen hinausgeschoben wird.

Für die Betätigung des verschieb- und verschwenkbaren Daches wurden schon die verschiedensten Vorschläge gemacht, die jedoch alle nicht befriedigen konnten. Entweder war die Anbringung von Türen nicht möglich, weil die Betätigungsorgane den für die Türen notwendigen Platz benötigten, oder das Dach wurde als ganzes aufgeklappt, was bei auch nur geringem Windanfall nicht durchzuführen war.

Die Erfindung hat es sich zum Ziel gesetzt, ein Dach der oben genannten Art zu schaffen, das leicht und sicher beweglich ist, wobei ohne weiteres Türen angeordnet werden können. Erreicht wird dies dadurch, daß zur Führung des Daches dieses vorne und hinten mit Führungen versehen ist, die mit an einer oberen Kante des Laderaumes angeordneten Gegenführungen zusammenwirken, und das beiderseits je ein Arm vorgesehen ist, der einerseits am Dach und andererseits im oberen Bereich des Laderaumes angelenkt ist.

Bei einem erfindungsgemäßen Dach nach Anspruch 1 beeinträchtigen keine Antriebs- und/oder Führungsorgane die Anbringung von Türen im hinteren Laderaumbereich, sodaß die Entladung des Schüttgutes durch diese Türen erfolgen kann.

Bei einem bevorzugten Ausführungsbeispiel der Erfindung greift am Arm ein hydraulischer Schubmotor an. Dieser bewirkt die Verschwenkung des Armes und damit die Bewegung des Daches.

Es ist im Rahmen der Erfindung aber auch möglich, daß für den Antrieb des Armes ein Drehmotor angeordnet ist. Dieser Drehmotor könnte z.B. ein Elektromotor sein, vorzugsweise wird aber ein hydraulischer Drehmotor angeordnet.

Bei einem möglichen Ausführungsbeispiel des Erfindung weisen die Gegenführungen Rollen oder Zahnräder auf.

Nachstehend ist die Erfindung anhand eines in den Zeichnungen dargestellten Ausführungsbeispieles näher beschrieben, ohne auf dieses Ausführungsbeispiel beschränkt zu sein. Dabei zeigen:
- Fig. 1: in schematischer Darstellung ein erfindungsgemäßes Dach in geschlossener Stellung;
- Fig. 2: das Dach nach Fig. 1 in einer Mittelstellung;
- Fig. 3: das in den Fig. 1 und 2 gezeigte Dach in voll geöffnetem Zustand;

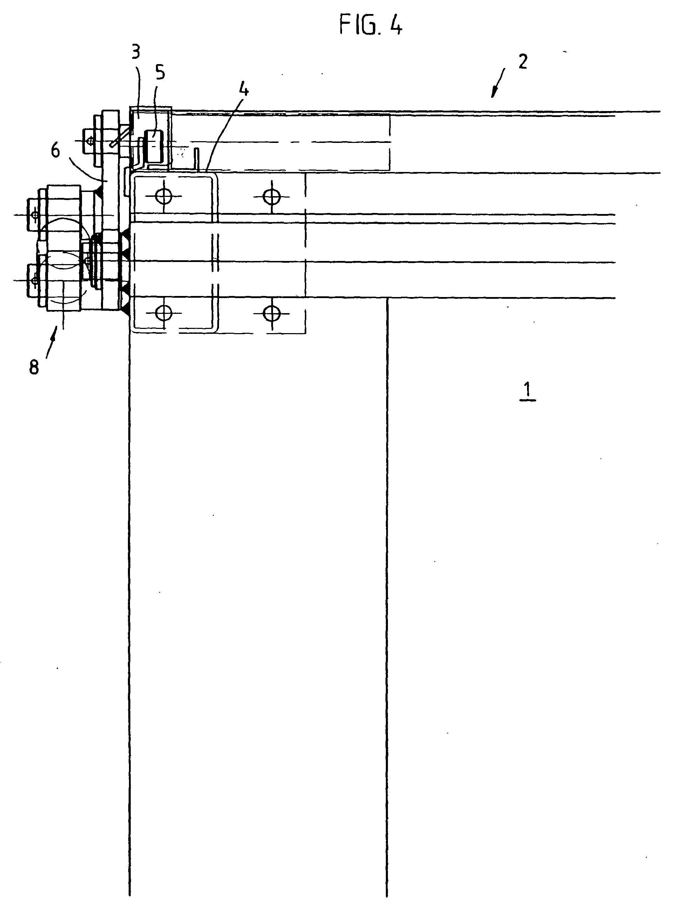

- Fig. 4: in gegenüber den Fig. 1 bis 3 vergrößertem Maßstab eine Ansicht in Richtung des Pfeiles IV in Fig. 1.

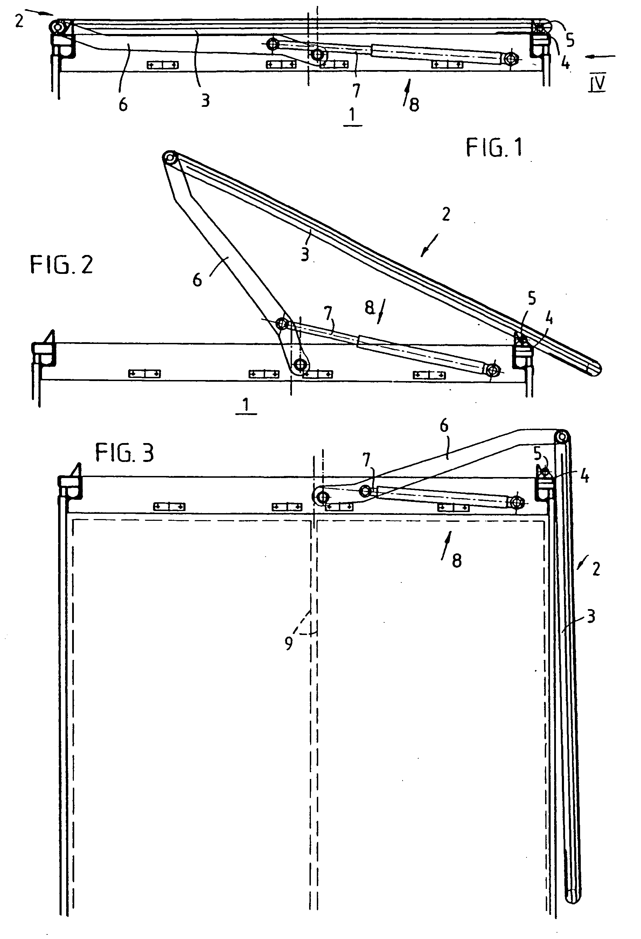

Gemäß den Zeichnungen ist zur Abdeckung des Laderaumes 1 eines Lastkraftwagens oder Anhängers ein Dach 2 angeordnet. Die Fig. 1 bis 3 stellen dabei jeweils Ansichten auf die hintere Seite des Laderaumes 1 und damit des Fahrzeuges dar.

Das Dach 2 weist hinten und vorne Führungen 3 auf, die mit Gegenführungen an der oberen Kante des Laderaumes 1 zusammenwirken. Diese Gegenführungen bestehen beim gezeigten Ausführungsbeispiel aus der oberen Kante 4 selbst, an der das Dach 2 mit seinen Führungen 3 gleitet. Rollen 5 sind vorgesehen, die mit den Führungen 3 zusammenwirken und ein Abheben des Daches 2 z.B. bei Windanfall verhindern.

An dem bei geschlossenem Dach 2 der Kante 4 gegenüberliegendem Ende des Daches 2 greift je ein Arm 6 an, der im oberen Bereich des Laderaumes 1 angelenkt ist. An diesem Arm 6 greift die Kolbenstange 7 eines hydraulischen Schubmotors 8 an.

In den Fig. 1 bis 3 ist die Öffnungsbewegung des Daches 2 veranschaulicht: Durch Betätigung des hydraulischen Schubmotors 8 wird das Dach 2 im Beispiel links angehoben, gleitet mit Hilfe der Führungen 3 über die rechte Kante 4 des Laderaumes 1 und gelangt schließlich in die Endstellung nach Fig. 3. In dieser Stellung kann der Laderaum 1 von oben beladen werden.

Die Entladung erfolgt beim gezeigten Ausführungsbeispiel über hintere Türen 9, die in Fig. 3 strichliert angedeutet sind. Wie aus den Zeichnungen ersichtlich ist, stören die Arme 6 und die Schubmotoren 8 die Anbringung dieser Türen 9 nicht.

Im Rahmen der Erfindung sind zahlreiche Abänderungen möglich. So könnte statt des hydraulischen Schubmotors 8 an der Drehachse des Armes 6 ein elektrischer oder hydraulischer Drehmotor angreifen, sodaß diese Achse dann zur Antriebswelle für den Arm 6 wird. Auch die Art der Führung des Daches 2 könnte auf andere Weise erfolgen. Es könnten hierzu Rollen oder Zahnräder verwendet werden.

## Patentansprüche

1. Verschieb- und verschwenkbares Dach (2) für einen Lastkraftwagen oder Anhänger mit einem von oben befüllbaren Laderaum (1), **dadurch gekennzeichnet, daß** zur Führung des Daches (2) dieses vorne und hinten mit Führungen (3) versehen ist zum Zusammenwirken mit an einer oberen Kante des Laderaumes (1) angeordneten Gegenführungen (4) und daß beidseitig je ein Arm (6) vorgesehen ist, der einerseits am Dach (2) angelenkt ist und andererseits im oberen Bereich des Laderaumes (1) anlenkbar ist.

2. Verschieb- und verschwenkbares Dach nach Anspruch 1, **dadurch gekennzeichnet, daß** an dem Arm (6) ein hydraulischer Schubmotor (8) angreift.

3. Verschieb- und verschwenkbares Dach nach Anspruch 1, **dadurch gekennzeichnet, daß** für den Antrieb des Armes (6) ein vorzugsweise hydraulischer Drehmotor angeordnet ist.

4. Verschieb- und verschwenkbares Dach nach einem der Ansprüche 1 bis 3 mit Laderaum, **dadurch gekennzeichnet, daß** die Gegenführungen Rollen oder Zahnräder aufweisen.

## Claims

1. A slidable and swivellable roof (2) for a lorry or trailer with a loading space (1) that can be filled from above, **characterised in that** for the guidance of the roof (2) the latter is provided at front and rear with guides (3), to act together with counter-guides (4) arranged on an upper edge of the loading space (1), and that on each of the two sides an arm (6) is provided that on the one hand is pivoted to the roof (2) and on the other hand is pivoted in the upper region of the loading space (1).

2. The slidable and swivellable roof according to Claim 1, **characterised in that** a linear hydraulic motor (8) engages with the arm (6).

3. The slidable and swivellable roof according to Claim 1, **characterised in that** a preferably hydraulic rotary motor is arranged for the drive of the arm (6).

4. The slidable and swivellable roof according to one of the Claims 1 to 3, **characterised in that** the counter-guides have rollers or gears.

## Revendications

1. Toit coulissant ou basculant (2) pour un camion ou une remorque avec un espace de chargement remplissable par le haut (1) **caractérisé en ce que** pour le guidage du toit (2), celui-ci est muni à l'avant et à l'arrière de guides (3) qui coopèrent avec des contre-guides (4) disposés sur un bord supérieur de l'espace de chargement (1) et **en ce qu'**il est prévu des deux côtés un bras (6) qui est articulable d'une part au toit (2) et d'autre part dans la zone supérieure de l'espace de chargement (1).

2. Toit coulissant ou basculant selon la revendication 1, **caractérisé en ce qu'**un moteur de poussée hydraulique (8) s'applique sur le bras (6).

3. Toit coulissant ou basculant selon la revendication 1, **caractérisé en ce qu'**un moteur rotatif de préférence hydraulique est mis en place pour l'entraînement du bras (6).

4. Toit coulissant ou basculant selon l'une des revendications 1 à 3 avec espace de chargement, **caractérisé en ce que** les contre-guides présentent des galets ou des roues dentées.
